# EUROPÄISCHE PATENTSCHRIFT

(11) **EP 2 949 491 B1**
(45) Veröffentlichungstag und Bekanntmachung des Hinweises auf die Patenterteilung: **11.01.2017**
(21) Anmeldenummer: 15001188.0
(22) Anmeldetag: 22.04.2015
(51) Int. Cl.: B60G 13/14, F16F 15/03, B60G 15/02, F16F 15/121

(54) **ROTATIONSDÄMPFER**
ROTARY DAMPER
AMORTISSEUR ROTATIF

(30) Priorität: 26.04.2014 DE 102014006291
(43) Veröffentlichungstag der Anmeldung: 02.12.2015
(73) Patentinhaber: AUDI AG, 85045 Ingolstadt (DE)
(72) Erfinder: Willems, Marco, DE - 85053 Ingolstadt (DE)
(74) Vertreter: Reichert, Thomas Klaus

(56) Entgegenhaltungen:
- DE-A1-102011 009 608
- DE-A1-102011 101 350
- DE-A1-102012 009 168
- JP-A- 2012 187 988

## Beschreibung

Die Erfindung betrifft einen Rotationsdämpfer mit einem Dämpfergehäuse, das einen Dämpfermotor umgibt und über ein Befestigungsteil an einer ersten Masse befestigt ist, und mit einem Anlenkhebel, der gegenüber dem Befestigungsteil schwenkbar gelagert und mit einer zweiten Masse verbunden ist, sowie mit einem Getriebe zum Übertragen und/oder Wandeln einer relativen Drehbewegung zwischen den Massen auf den Dämpfermotor zur Schwingungsdämpfung.

DE 10 2011 101 701 A1 betrifft einen Rotationsdämpfer für ein Kraftfahrzeug umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse. An dem Rotationsdämpfer ist wenigstens ein Schwingungstilger angeordnet. Das Dämpferelement umfasst ein feststehendes erstes Dämpferteil und ein unter Ausbildung einer Dämpfkraft relativ dazu drehbar gelagertes, mit einem durch die Massenbewegung bewegbaren, mit der ersten Masse verbundenen Hebelelement verbundenes, zweites Dämpferteil, wobei das Hebelelement bei einer Massenbewegung eine Drehbewegung auf das zweite Dämpferteil überträgt. Der Schwingungstilger ist an dem zweiten Dämpferteil und/oder dem Hebelelement angeordnet.

DE 10 2012 009 168 A1 offenbart eine Dämpfungseinrichtung mit einem Rotationsdämpfer für ein Fahrzeug zum Dämpfen einer an einem Eingangselement, insbesondere einer Koppelstange, auftretenden Schwenkbewegung, wobei das Eingangselement über ein Getriebe den Rotor des Rotationsdämpfers beim Verschwenken antreibt. Das Eingangselement ist über eine Rutschkupplung mit dem Getriebe gekoppelt. An der Rutschkupplung auftretende Drehmomente, die über einem vorgegebenen Grenzdrehmoment liegen, führen zu einer Relativbewegung zwischen dem Eingangselement ( 6 ) und dem Getriebe. Der Rotationsdämpfer ist ein elektrischer Rotationsdämpfer, der als Generator arbeitet.

DE 10 2011 102 743 A1 betrifft ein Kraftfahrzeug mit mehreren über Radaufhängungen fahrzeugkarosserieseitig anbringbaren oder angebrachten Fahrzeugrädern, wobei eine Radaufhängung wenigstens einen ein Fahrzeugrad mit einer Fahrzeugkarosserie verbindenden, um eine Achse schwenkbar gelagerten Lenker, und wenigstens einen Rotationsdämpfer mit wenigstens einem Dämpferelement zum Dämpfen der Relativbewegung zwischen einer radaufhängungsseitig angeordneten ersten Masse und einer fahrzeugkarosserieseitig angeordneten zweiten Masse, wobei der Rotationsdämpfer direkt in die Lagerung des Lenkers integriert ist, wobei durch die Massenbewegung herbeigeführte Schwenkbewegungen des Lenkers auf ein mit diesem bewegungsgekoppeltes drehbares Dämpferteil des Dämpferelements übertragbar sind.

EP 1 354 731 B1 betrifft eine Dämpfungsanordnung für eine Fahrzeugaufhängung, die eine Torsionsfedereinheit und einen Rotationsdämpfer umfasst. Die Fahrzeugaufhängung umfasst für jedes Rad mindestens zwei Lenker, die ein Rad mit einem Fahrzeugfahrgestell verbinden. Jede Torsionsfedereinheit ist mit einem Aktuator zum Vorspannen der Torsionsfedereinheit und Vorbelasten der Blattfeder versehen, um das Fahrzeug auf eine Sollhöhe einzustellen. Um die Auslenkung eines Hebelarms der Radaufhängung zu begrenzen, ist ein nachgiebiger Anschlag vorgesehen, der mit dem Fahrzeugaufbau verbunden ist. Somit ist ein von dem Dämpfer unabhängiger Anschlag zur Begrenzung der Bewegung der Radaufhängung vorgesehen, was als bauaufwendig empfunden wird.

WO 2013/138912 A1 zeigt eine Drehmoment-Begrenzungsanordnung zur Verwendung mit einem Aktuator zur Übertragung des Drehmoments. Die Anordnung umfasst einen Bremsbelag, wobei ein Band an einer ersten Extremität des Bremsbackens befestigt ist und ein Nocken ein zweites Ende des Bandes mit einer zweiten Extremität des Bremsbackens verbindet. Der Bremsbacken und das Band sind um einen Drehmoment-Übertragungsausgang gelegt, und eine Positionierung des Nockens in einer ersten Position rückt den Bremsbacken reibungsmäßig ein und das Band mit dem Drehmoment-Übertragungsausgang, während die Positionierung des Nockens in einer zweiten Position den Bremsbacken löst und das Band mit dem Drehmoment-Übertragungsausgang. Eine derartige Drehmomentbremse garantiert keine sichere Begrenzung der Drehbewegung einer sich drehenden Masse gegenüber einer festen Masse.

Dem gegenüber liegt der Erfindung die Aufgabe zugrunde, einen Rotationsdämpfer bereitzustellen, bei dem die Auslenkung des Anlenkhebels gegenüber dem Dämpfergehäuse mit einfachen Mitteln und kleinbauend begrenzt wird.

Dazu ist der erfindungsgemäße Rotationsdämpfer dadurch gekennzeichnet, dass der Anlenkhebel einen Nockenansatz aufweist, in dessen Bewegungsbahn bei einer Verschwenkung des Anlenkhebels gegenüber dem Dämpfergehäuse zwei Anschläge vorgesehen sind, die mit dem Dämpfergehäuse verbunden sind. Dabei sind in vorteilhafter Weise die Anschläge für die Auslenkung des Anlenkhebels gegenüber dem Dämpfergehäuse in das Dämpfergehäuse in einer Baueinheit integriert, wodurch sich eine Baueinheit ergibt, die Vorteile hinsichtlich Fahrzeugbauraum und Montage bietet.

Nach einer vorteilhaften Ausführungsform ist der erfindungsgemäße Rotationsdämpfer dadurch gekennzeichnet, dass in der Bewegungsbahn des Nockenansatzes an den Anschlägen Dämpfungsteile angeordnet sind. Durch die Dämpfungsteile wird die Bewegung des Anlenkhebels gedämpft, wodurch in vorteilhafter Weise eine mechanische Belastung des Rotationsdämpfers vermieden und eine Geräuschentwicklung beim Erreichen der Endlagen des Anlenkhebels herabgesetzt wird.

Nach einer weiteren vorteilhaften Ausführungsform ist der erfindungsgemäße Rotationsdämpfer dadurch gekennzeichnet, dass die Dämpfungsteile Federn sind. Durch die Verwendung von Federn als Dämpfungsteile wird eine glattgängige Abbremsung des Anlenkhebels bei seiner Verschwenkung, insbesondere beim Ende seiner Schwenkbewegung, erreicht.

Nach einer weiteren vorteilhaften Ausführungsform ist der erfindungsgemäße Rotationsdämpfer dadurch gekennzeichnet, dass die Federn in Umfangsrichtung des Rotationsdämpfers angeordnet sind und sich an den Anschlägen abstützen. Schraubenfedern in dem Dämpfergehäuse geführt sind. Dadurch ergibt sich der Vorteil, dass die Schraubenfedern leicht in den Rotationsdämpfer integrierbar sind.

Nach einer weiteren vorteilhaften Ausführungsform ist der erfindungsgemäße Rotationsdämpfer dadurch gekennzeichnet, dass die Federn Schraubenfedern sind. Obwohl auch andere Arten von Federn verwendet werden können, haben Schraubenfedern den Vorteil, dass sie preiswert herzustellen und leicht zu handhaben sind.

Nach einer weiteren vorteilhaften Ausführungsform ist der erfindungsgemäße Rotationsdämpfer dadurch gekennzeichnet, dass die Schraubenfedern in dem Dämpfergehäuse geführt sind. Dadurch ergibt sich der Vorteil, dass die Schraubenfedern lediglich in das Gehäuse eingelegt und ansonsten nicht weiter bearbeitet oder eingerichtet werden müssen.

Nach einer weiteren vorteilhaften Ausführungsform ist der erfindungsgemäße Rotationsdämpfer dadurch gekennzeichnet, dass der Nockenansatz im Schnitt trapezförmig ausgebildet ist, wobei die kürzere der beiden parallelen Trapezseiten an dem Anlenkhebel liegt und die abgeschrägten Trapezseiten radiale Abstützungsflächen für die Federn bilden. Durch diese Abstützung der Federn an dem Nockenansatz des Anlenkhebels wird eine gleichmäßige Belastung der an dem Nockenansatz liegenden Enden der Federn erreicht, so dass die Federn gleichmäßig unter Druck gesetzt werden, wenn der Anlenkhebel in seine Endlagen verschwenkt wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittdarstellung des erfindungsgemäßen Rotationsdämpfers entlang einer Ebene in Längsrichtung des Rotationsdämpfers;
- Fig. 2: eine perspektivische Darstellung des erfindungsgemäßen Rotationsdämpfers, und
- Fig. 3: eine Frontansicht des erfindungsgemäßen Rotationsdämpfers nach Fig. 1.

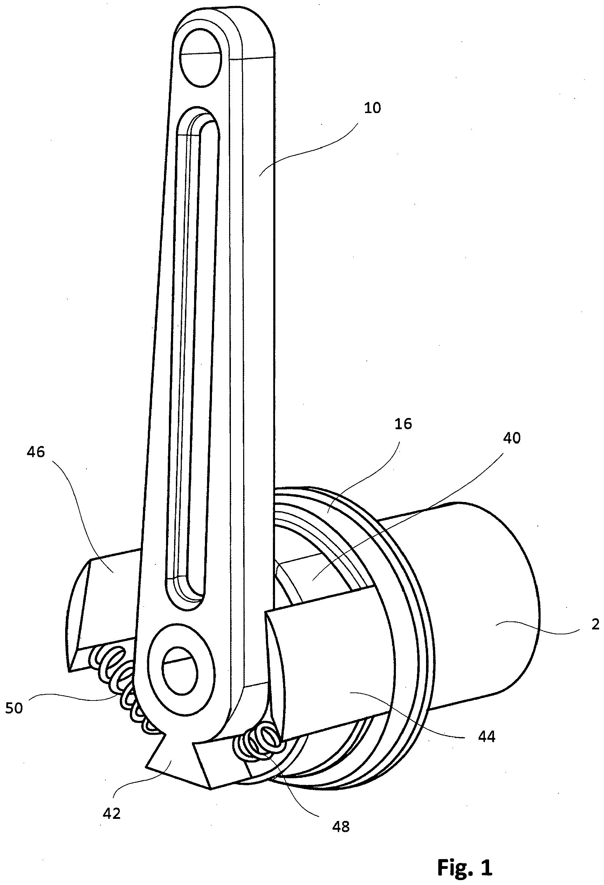

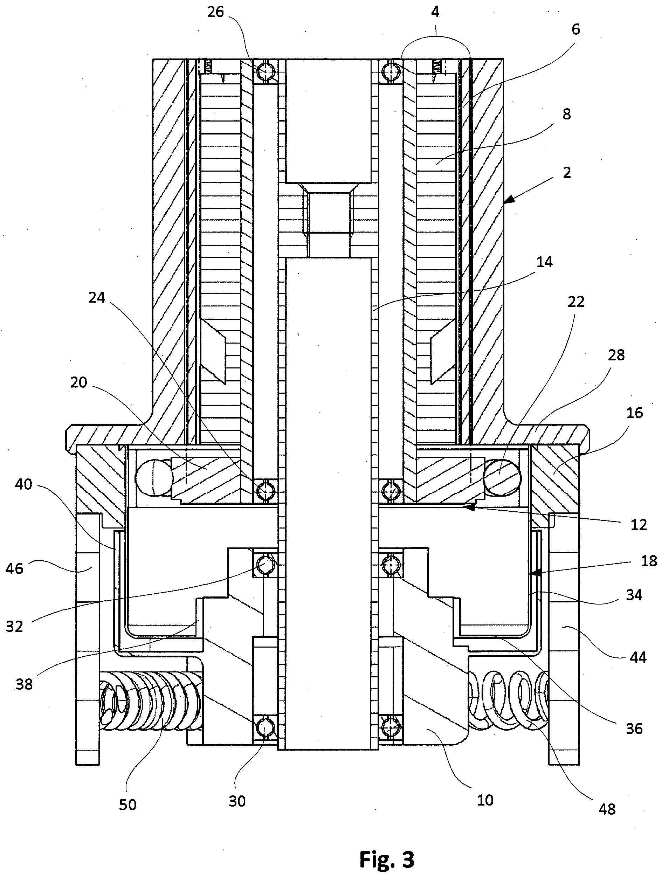

Ein Rotationsdämpfer weist gemäß den Fig. 1 und 3 ein Dämpfergehäuse 2 auf, das einen elektromagnetischen Dämpfermotor 4 umgibt, der einen Stator 6 und einen in dem Stator 6 angeordneten Rotor 8 sowie Mittel zur Erzeugung eines Magnetfeldes an dem Rotor 8 und dem Stator 6 umfasst. Das Dämpfergehäuse 2 ist über ein Befestigungsteil (nicht gezeigt) an einer ersten Masse befestigt. Ein Anlenkhebel 10 des Rotationsdämpfers ist gegenüber dem Dämpfergehäuse 4 schwenkbar gelagert und mit einer zweiten Masse verbunden. Schließlich ist ein Spannungswellengetriebe 12 vorgesehen zum Übertragen und/oder Wandeln einer relativen Drehbewegung zwischen den Massen auf den Dämpfermotor 4 zur Schwingungsdämpfung.

Der Rotor 8 ist auf einem Lagerteil 14 koaxial mit dem Dämpfergehäuse 2 drehbar gelagert, während der Stator 6 an dem Dämpfergehäuse 2 befestigt ist. Der Rotor 8 kann eine Magnetanordnung umfassen, während der Stator 6 eine bestrombare Spulenanordnung umfassen kann, wie dies bei derartigen Dämpfermotoren 4 üblich ist.

Das Getriebe 12 ist ein Spannungswellengetriebe, das eine eine Innenverzahnung aufweisende, starre Einheit 16 und eine eine Außenverzahnung aufweisende, flexible Einheit 18 und einen in der flexiblen Einheit 18 drehbar gelagerten, ovalen Wellengenerator 20 aufweist, durch dessen Drehung die flexible Einheit 18 verformbar ist, wobei die beiden Einheiten 16, 18 formschlüssig über die Verzahnungen miteinander gekoppelt sind. Zwischen der flexiblen Einheit 18 und dem Wellengenerator 20 ist ein flexibles Wälzlager 22 angeordnet. Der Rotor 8 des Getriebes 12 ist über Rollenlager 24, 26 drehbar an dem Lagerteil 14 gelagert.

Die starre Einheit 16 ist mit einer radialen Wand 28 des Dämpfergehäuses 2 verbunden, während der Wellengenerator 20 mit dem Rotor 8 des Dämpfermotors 4 verbunden ist. Die flexible Einheit 18 ist mit dem Anlenkhebel 10 verbunden, der über Rollenlager 30, 32 an dem Lagerteil 14 gelagert ist. Zur Verbindung der flexiblen Einheit 18 mit dem Anlenkhebel 10 weist die flexible Einheit 18 einen axialen Wandabschnitt 34, einen radialen Wandabschnitt 36 und einen an dem Anlenkhebel 10 befestigten weiteren axialen Wandabschnitt 38 auf. An dem Anlenkhebel 10 ist ein becherförmiger Gehäuseteil 40 angeordnet, der die flexible Einheit 18 in dem Bereich zwischen der starren Einheit 16 und dem Anlenkhebel 10 abdeckt und damit dem Eindringen von Schmutzpartikeln entgegenwirkt.

Bei einer Ausführungsform kann das Dämpfergehäuse 2 über dem Lagerteil 14 mit dem Fahrzeugaufbau verbunden sein. An dem anderen Ende des Dämpfungsgehäuses 2 ist der Anlenkhebel 10 angeordnet, der den Dämpfermotor 4 antreibt.

Bei einer Ein-/Ausfederbewegung des Rades wird der Anlenkhebel 10 gegenüber dem Dämpfungsgehäuse 2 um einen Winkel geschwenkt. Infolge dieser Schwenkbewegung wird von dem Dämpfermotor 4 eine rückstellende Kraft erzeugt. Infolge der Drehgeschwindigkeit erzeugt der Rotationsdämpfer dadurch eine Dämpfungskraft.

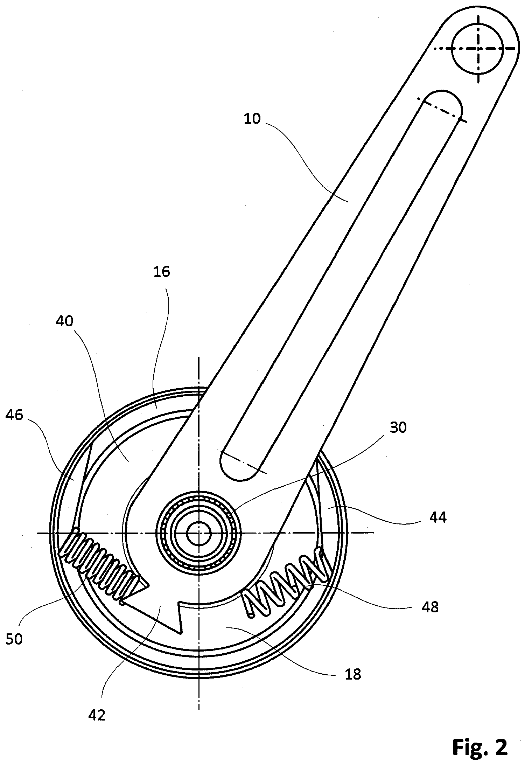

Nach den Fig. 1 bis 3 weist der Anlenkhebel 10 einen Nockenansatz 42 auf, in dessen Bewegungsbahn bei einer Verschwenkung des Anlenkhebels 10 gegenüber dem Dämpfergehäuse 4 zwei Anschläge 44, 46 vorgesehen sind, die ihrerseits über die starre Einheit 16 mit dem Dämpfergehäuse 2 verbunden sind.

In der Bewegungsbahn des Nockenansatzes 40 sind an den Anschlägen 44, 46 ferner Dämpfungsteile in Form von Federn 48, 50 angeordnet, die sich in Umfangsrichtung des Rotationsdämpfers erstrecken und einerseits an dem Nockenansatz 42 in Eingriff zu bringen sind und sich andererseits an den Anschlägen 44, 46 abstützen.

Die Federn können im Prinzip beliebige Federn sein, sie sind jedoch in dem gezeigten Ausführungsbeispiel als Schraubenfeder ausgebildet. Die Federn 48, 50 sind in dem Dämpfergehäuse 2 durch einen Deckel (nicht gezeigt), den radialen Ansatz 38 des Anlenkhebels 10 und die Anschläge 44, 46 geführt.

Die Erfindung ist nicht auf die gezeigten Ausführungsbeispiele eingeschränkt, sondern umfasst Rotationsdämpfer, die unter den Schutzumfang der Ansprüche fallen. Insbesondere können andere Arten von Dämpfungsmotoren als elektromagnetische Dämpfungsmotoren und andere Arten von Getrieben als Spannungswellengetriebe eingesetzt werden, ohne den Umfang der Ansprüche zu verlassen.

### Bezugszeichenliste

- 2: Dämpfergehäuse
- 4: Dämpfermotor
- 6: Stator
- 8: Rotor
- 10: Anlenkhebel
- 12: Spannungswellengetriebe
- 14: Lagerteil
- 16: starre Einheit
- 18: flexible Einheit
- 20: Wellengenerator
- 22: Wälzlager
- 24: Rollenlager
- 26: Rollenlager
- 28: radiale Wand
- 30: Rollenlager
- 32: Rollenlager
- 34: axialer Wandabschnitt
- 36: radialer Wandabschnitt
- 38: axialer Wandabschnitt
- 40: Gehäuseteil
- 42: Nockenansatz
- 44: Anschlag
- 46: Anschlag
- 48: Feder
- 50: Feder

## Patentansprüche

1. Rotationsdämpfer mit einem Dämpfergehäuse (2), das einen Dämpfermotor (4) umgibt und über ein Befestigungsteil an einer ersten Masse befestigt ist, und mit einem Anlenkhebel (10), der gegenüber dem Dämpfergehäuse (2)schwenkbar gelagert und mit einer zweiten Masse verbunden ist, sowie mit einem Getriebe (12) zum Übertragen und/oder Wandeln einer relativen Drehbewegung zwischen den Massen auf den Dämpfermotor (4) zur Schwingungsdämpfung,
**dadurch gekennzeichnet, dass**
der Anlenkhebel (1) einen Nockenansatz (42) aufweist, in dessen Bewegungsbahn bei einer Verschwenkung des Anlenkhebels (10) gegenüber dem Dämpfergehäuse (2) zwei Anschläge (44, 46) vorgesehen sind, die mit dem Dämpfergehäuse (2) verbunden sind.

2. Rotationsdämpfer nach Anspruch 1, **dadurch gekennzeichnet, dass** in der Bewegungsbahn des Nockenansatzes (42) an den Anschlägen (44, 46) Dämpfungsteile angeordnet sind.

3. Rotationsdämpfer nach Anspruch 2, **dadurch gekennzeichnet, dass** die Dämpfungsteile Federn (48, 50) sind.

4. Rotationsdämpfer nach Anspruch 2, **dadurch gekennzeichnet, dass** die Federn (48, 50) in Umfangsrichtung des Rotationsdämpfers angeordnet sind und sich an den Anschlägen (44, 46) abstützen.

5. Rotationsdämpfer nach Anspruch 3, **dadurch gekennzeichnet, dass** die Federn (48, 50) Schraubenfedern sind.

6. Rotationsdämpfer nach Anspruch 3 oder 4, **dadurch gekennzeichnet, dass** die Federn (48, 50) bzw. Dämpfungsteile in dem Dämpfergehäuse (2) geführt sind.

7. Rotationsdämpfer nach einem der Ansprüche 3 bis 5, **dadurch gekennzeichnet, dass** der Nockenansatz (42) im Schnitt trapezförmig ausgebildet ist, wobei die kürzere der beiden parallelen Trapezseiten an dem Anlenkhebel (10) liegt und die abgeschrägten Trapezseiten radiale Abstützungsflächen für die Dämpfungsteile bzw. Federn (48, 50) bilden.

## Claims

1. Rotational damper having a damper housing (2) which surrounds a damper motor (4) and is mounted via a mounting device on a first mass, and having a feedback lever (10) which is pivotably mounted relative to the damper housing (2) and connected to a second mass, and having a gear (12) for transferring and/or converting a relative rotary motion between the masses to the damper motor (4) for vibration damping,
**characterised in that**
the feedback lever (1) has a cam projection (42) in whose trajectory two limit stops (44, 46) are provided during pivoting of the feedback lever (10) relative to the damper housing (2), said limit stops being connected to the damper housing (2).

2. Rotational damper according to claim 1, **characterised in that** damping parts are arranged on the limit stops (44, 46) in the trajectory of the cam projection (42).

3. Rotational damper according to claim 2, **characterised in that** the damping parts are springs (48, 50).

4. Rotational damper according to claim 2, **characterised in that** the springs (48, 50) are arranged in the circumferential direction of the rotational damper and are supported by the limit stops (44, 46).

5. Rotational damper according to claim 3, **characterised in that** the springs (48, 50) are coil springs.

6. Rotational damper according to claim 3 or 4, **characterised in that** the springs (48, 50) or damping parts are guided in the damper housing (2).

7. Rotational damper according to any one of claims 3 to 5, **characterised in that** the cam projection (42) is designed to be trapezoidal in cross-section, where the shorter of the two parallel trapezium sides is situated on the feedback lever (10) and the bevelled sides of the trapezium form radial support surfaces for the damping parts or springs (48, 50).

## Revendications

1. Amortisseur rotatif comprenant un carter d'amortisseur (2), qui entoure un moteur d'amortisseur (4) et qui est fixé à une première masse par l'intermédiaire d'une pièce de fixation, et comprenant un levier d'articulation (10), qui est logé de manière à pouvoir pivoter par rapport au carter d'amortisseur (2) et qui est relié à une deuxième masse, comprenant également une transmission (12) servant à transmettre et/ou à convertir un mouvement de rotation relatif entre les masses au moteur d'amortisseur (4) en vue de l'amortissement d'oscillations,
**caractérisé en ce que**
le levier d'articulation (1) présente un appendice de came (42), dans la trajectoire de déplacement duquel sont prévues, lors d'un pivotement du levier d'articulation (10) par rapport au carter d'amortisseur (2), deux butées (44, 46), qui sont reliées au carter d'amortisseur (2).

2. Amortisseur rotatif selon la revendication 1, **caractérisé en ce que**, dans la trajectoire de déplacement de l'appendice de came (42), des pièces d'amortissement sont disposées au niveau des butées (44, 46).

3. Amortisseur rotatif selon la revendication 2, **caractérisé en ce que** les pièces d'amortissement sont des ressorts (48, 50).

4. Amortisseur rotatif selon la revendication 2, **caractérisé en ce que** les ressorts (48, 50) sont disposés dans la direction circonférentielle de l'amortisseur rotatif et prennent appui sur les butées (44, 46).

5. Amortisseur rotatif selon la revendication 3, **caractérisé en ce que** les ressorts (48, 50) sont des ressorts hélicoïdaux.

6. Amortisseur rotatif selon la revendication 3 ou 4, **caractérisé en ce que** les ressorts (48, 50) ou les pièces d'amortissement sont guidés dans le carter d'amortisseur (2).

7. Amortisseur rotatif selon l'une quelconque des revendications 3 à 5, **caractérisé en ce que** l'appendice de came (42) est réalisé, en coupe, de manière à présenter une forme de trapèze, le plus court des deux côtés de trapèze parallèles se trouvant au niveau du levier d'articulation (10) et les côtés de trapèze biseautés formant des surfaces d'appui radiales pour les pièces d'amortissement ou pour les ressorts (48, 50).
